# EUROPÄISCHE PATENTSCHRIFT

(11) **EP 2 560 464 B1**
(45) Veröffentlichungstag und Bekanntmachung des Hinweises auf die Patenterteilung: **13.09.2017**
(21) Anmeldenummer: 12174687.9
(22) Anmeldetag: 03.07.2012
(51) Int. Cl.: H05B 37/02

(54) **Verfahren zur Steuerung und Regelung eines Lichtsystems**
Method for controlling and regulating a light system
Procédé de commande et de régulation d'un système lumineux

(30) Priorität: 17.08.2011 DE 102011081097
(43) Veröffentlichungstag der Anmeldung: 20.02.2013
(73) Patentinhaber: Siemens Schweiz AG, 8047 Zürich (CH)
(72) Erfinder: Ferstl, Peter, 93053 Regensburg (DE); Mühlfenzl, Christian, 93055 Regensburg (DE)
(74) Vertreter: Maier, Daniel Oliver

(56) Entgegenhaltungen:
- WO-A1-2011/033444
- WO-A2-2010/010491

## Beschreibung

Die vorliegende Erfindung betrifft ein Verfahren zur Steuerung und Regelung eines Lichtsystems mit einer Hauptlichtgruppe und zumindest einer Nebenlichtgruppe für einen Innenraum. Weiter betrifft die vorliegende Erfindung ein Lichtsystem mit einer Hauptlichtgruppe und einer Nebenlichtgruppe für die Beleuchtung eines Innenraums.

Es ist bekannt, dass Lichtsysteme für die Beleuchtung von Innenräumen verwendet werden. Dabei kommt eine Vielzahl von Lichtgruppen zum Einsatz, die an unterschiedlichen Positionen, zum Beispiel an der Decke, des Innenraums angebracht sind. Auch ist es bekannt, dass solche Lichtsysteme über eine Helligkeitssensorik aktiv geregelt werden. Dabei hat es sich als nachteilhaft herausgestellt, wenn sämtliche Lichtgruppen mit jeweils einem eigenen Sensor und einer eigenen Regelvorrichtung versehen sind. Dadurch werden die Komplexität und auch die Kosten derartiger Vorrichtungen sowie derartiger Regelverfahren um ein Vielfaches erhöht.

Auch ist bereits vorgeschlagen worden, die einzelnen Lichtgruppen eines Lichtsystems zu unterscheiden in eine Hauptlichtgruppe und eine oder mehreren Nebenlichtgruppen. Bei bekannten Verfahren wird für die Steuerung solcher Lichtsysteme ein einziger Sensor für die Regelung der Hauptlichtgruppe zur Verfügung gestellt. Die Nebenlichtgruppen werden in einer festen Abhängigkeit von der Hauptlichtgruppe gesteuert. Mit anderen Worten wird für die Nebenlichtgruppe beziehungsweise die Vielzahl der Nebenlichtgruppen ein fester Faktor vorgegeben, um den eine Stellgröße für die Nebenlichtgruppen in Abhängigkeit der Stellgröße für die Hauptlichtgruppe angepasst wird. Ist beispielsweise für die Hauptlichtgruppe eine Stellgröße über den Sensor und die entsprechende Regelung von 40% vorgegeben worden, so sind für jede Nebenlichtgruppe in Abhängigkeit des festen Faktors entsprechende feste Stellgrößen vorgegeben. Wird zum Beispiel ein Faktor von -10% mit Bezug auf die Stellgröße der Hauptlichtgruppe vorgegeben, so bedeutet dies, dass die entsprechende Nebenlichtgruppe 40% minus 10%, also 30% als Stellgröße erhält. Dokument WO2010/010491 A2 offenbart ein Lichtsystem (und implizit ein Verfahren) zur Steuerung einer Mehrheit von Leuchtgruppen (eine Hauptlichtgruppe und zumindest eine Nebenlichtgruppe) durch die Erfassung des Helligkeitsanteils von sowie der Leuchtgruppen, noch von einer Fremdleuchte (z.B. die Sonne). Nachteilhaft bei den voranstehend beschriebenen Ausführungsformen bekannter Verfahren ist es, dass diese unflexibel sind. Insbesondere funktionieren sie nur in bestimmten Tagessituationen, also bei bestimmten und begrenzten Lichteinfällen. Darüber hinaus bringen sie den Nachteil mit sich, dass ohne jeglichen Fremdlichteinfall, also bei Nacht, oder bei geringem Fremdlichteinfall eine ungleichmäßige Ausleuchtung des Innenraums erfolgt. Dadurch, dass feste Faktoren verwendet werden, können die Nebenlichtgruppen nie ihre vollständige Leuchtkraft ausüben. Vielmehr wird auch bei vollständiger Dunkelheit außerhalb des Innenraums, also bei einem Fremdlichtanteil von ca. 0%, die entsprechende Nebenlichtgruppe nicht vollständig also zu 100% erleuchtet sein. Dies führt zu unerwünschten Ungleichmäßigkeiten bei der Ausleuchtung des Raumes.

Es ist Aufgabe der vorliegenden Erfindung die voranstehend beschriebenen Nachteile bekannter Verfahren und Vorrichtungen zumindest teilweise zu beheben. Insbesondere ist es Aufgabe der vorliegenden Erfindung ein Verfahren zur Steuerung und Regelung eines Lichtsystems sowie ein Lichtsystem mit einer Hauptlichtgruppe und einer Nebenlichtgruppe für einen Innenraum zur Verfügung zu stellen, welche in kostengünstiger und einfacher Weise eine flexible Steuerung der Nebenlichtgruppen ermöglichen. Insbesondere soll auch bei vollständigem Fehlen von Fremdlicht eine gleichmäßige Ausleuchtung des Innenraums durch die Hauptlichtgruppe und die Nebenlichtgruppe erzielbar sein.

Voranstehende Aufgabe wird gelöst durch ein Verfahren mit den Merkmalen des unabhängigen Anspruchs 1 sowie durch ein Lichtsystem mit den Merkmalen des unabhängigen Anspruchs 13. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen Lichtsystem und jeweils umgekehrt, so dass bezüglich der Offenbarung von den einzelnen Erfindungsaspekten stets wechselseitig Bezug genommen wird beziehungsweise werden kann.

Bei einem erfindungsgemäßen Verfahren zur Steuerung und Regelung eines Lichtsystems mit einer Hauptlichtgruppe und zumindest einer Nebenlichtgruppe für einen Innenraum sind die folgenden Schritte vorgesehen:
- Erfassen einer Helligkeit am Ort der Hauptlichtgruppe,
- Ermitteln eines Haupt-Fremdlichtanteils für die Hauptlichtgruppe,
- Ermitteln eines Neben-Fremdlichtanteils für zumindest eine Nebenlichtgruppe basierend auf dem Haupt-Fremdlichtanteil,
- Ermitteln eines Neben-Stellwertes für zumindest eine Nebenlichtgruppe basierend auf dem Neben-Fremdlichtanteil und einem Sollwert für diese Nebenlichtgruppe.

Im Vergleich zu bekannten Verfahren und Lichtsystemen wird durch ein erfindungsgemäßes Verfahren eine Abhängigkeit des Neben-Stellwertes von dem gemessenen Haupt-Fremdlichtanteil zur Verfügung gestellt. Hierbei wird eine einfache Steuerkette vorgesehen, so dass eine Rückkopplung zwischen der Nebenlichtgruppe und dem erfindungsgemäßen Verfahren nicht notwendig ist. Vielmehr wird ein einziger Wert für die Helligkeit am Ort der Hauptlichtgruppe sowohl für die Regelung der Hauptlichtgruppe, als auch für die Steuerung der Nebenlichtgruppe verwendet. So wird bei einem geringen Komplexitätsgrad des gesamten Lichtsystems durch ein erfindungsgemäßes Verfahren ermöglicht, dass eine flexible Steuerung der einzelnen Nebenlichtgruppen erfolgen kann. Dadurch, dass eine Abhängigkeit zwischen dem Neben-Stellwert und dem Haupt-Fremdlichtanteil besteht, kann sichergestellt werden, dass bei vollständiger Dunkelheit außerhalb des Innenraums, also bei einem Haupt-Fremdlichtanteil von ca. 0%, die entsprechenden Neben-Stellwerte für die Nebenlichtgruppen auf bis zu 100% hochgefahren werden können. Damit kann eine gleichmäßige Ausleuchtung bei unterschiedlichsten Beleuchtungssituationen außerhalb des Innenraums, insbesondere auch bei vollständiger Dunkelheit außerhalb des Innenraums, erfolgen. Dementsprechend können die Begriffe Fremdlichtanteil, Haupt-Fremdlichtanteil und Neben-Fremdlichtanteil insbesondere auch als Tageslichtanteil, Haupt-Tageslichtanteil und Neben-Tageslichtanteil bezeichnet werden bzw. durch diese Begriffe ersetzt werden.

Im Rahmen der vorliegenden Erfindung ist unter einer "Lichtgruppe" eine Gruppe mit wenigstens einem Leuchtmittel zu verstehen, welches einzeln ansteuerbar oder regelbar ist. Selbstverständlich ist es auch möglich, dass zumindest eine der Lichtgruppen mehr als ein Leuchtmittel aufweist. Sind in einem Innenraum eine Vielzahl von Leuchtmitteln angeordnet, so können diese vorzugsweise variabel einzelnen Gruppen zugeordnet sein. Beispielsweise kann eine Reihe von Leuchtmitteln in der Decke eines Raumes als Hauptlichtgruppe definiert werden. Weitere Reihen, die näher oder weiter weg von einem Fenster positioniert sind, bilden jeweils einzelne Nebenlichtgruppen. Die einzelnen Lichtgruppen zeichnen sich insbesondere durch ihre Position im Innenraum aus. Dabei ist besonders bevorzugt die Position relativ zu der Einfallsposition von Fremdlicht, beispielsweise einem Fenster, für die Gruppierung in die Hauptlichtgruppe und/oder die Nebenlichtgruppe relevant. Weiter ist vorzugsweise jedes Leuchtmittel nur einer einzigen Lichtgruppe zugeordnet. Die Zuordnung zu den einzelnen Lichtgruppen ist dabei für das Verfahren fest eingestellt.

Zu den einzelnen Schritten des Verfahrens wird später noch ausführlicher Stellung genommen. Insbesondere ist jedoch darauf hinzuweisen, dass eine Flexibilität des Neben-Stellwertes dahingehend erzielt wird, dass ein Neben-Fremdlichtanteil ermittelt wird. Dieser basiert wiederum auf dem Haupt-Fremdlichtanteil, so dass der Neben-Fremdlichtanteil nicht gemessen, sondern aus dem Haupt-Fremdlichtanteil heraus ermittelt wird. Aus einer einzigen Messung von Helligkeit wird dementsprechend eine Vielzahl von Werten für den Haupt-Fremdlichtanteil und einen oder mehreren Neben-Fremdlichtanteilen ermittelt. Unter Fremdlicht" ist im Rahmen der vorliegenden Erfindung Licht zu verstehen, welches nicht selbst vom Lichtsystem erzeugt worden ist. Insbesondere handelt es sich bei dem Fremdlicht im Rahmen der vorliegenden Erfindung zumindest teilweise um Tageslicht von außerhalb des Raumes.

Der Sollwert für die Nebenlichtgruppe ist insbesondere der Helligkeitssollwert an der Position der Nebenlichtgruppe. Dabei kann es vorteilhaft sein, wenn der Sollwert für die Nebenlichtgruppe identisch ist mit dem Sollwert für alle Nebenlichtgruppen und/oder identisch ist mit dem Sollwert für die Hauptlichtgruppe. Vorzugsweise ist ein gemeinsamer Helligkeitssollwert für das gesamte Lichtsystem vorgesehen, so dass eine gleichmäßige Ausleuchtung für das gesamte Lichtsystem erfolgt. Dies führt dazu, dass beispielsweise als Sollwert die 100%-ige Ausleuchtung erwünscht ist. Ist zum Beispiel für eine Nebenlichtgruppe ein Neben-Fremdlichtanteil von 90% ermittelt worden, so muss die entsprechende Nebenlichtgruppe nur noch 10% an Restlicht liefern, so dass ein entsprechender Neben-Stellwert ermittelt wird. Wird bei einer anderen Nebenlichtgruppe ein Neben-Fremdlichtanteil von 40% ermittelt, so wird als Neben-Stellwert 60% vorgegeben, so dass in Summe der gewünschte Helligkeitssollwert von 100% auch bei dieser Nebenlichtgruppe erreicht wird. Wie voranstehend beschrieben, wird auf diese Weise eine Dynamisierung der Steuerung der Nebenlichtgruppen erzielt, so dass ohne zusätzliche Komplexität hinsichtlich Konstruktion und Messung durch ein erfindungsgemäßes Verfahren eine variable und flexible Steuerung der Nebenlichtgruppen ermöglicht wird.

Ein erfindungsgemäßes Verfahren kann dahingehend weitergebildet sein, dass der Haupt-Fremdlichtanteil durch einen Vergleich zwischen einer Helligkeitskurve der Hauptlichtgruppe ohne Fremdlicht und der gemessenen Helligkeit, jeweils mit Bezug auf eine Haupt-Stellgröße der Hauptlichtgruppe, durchgeführt wird. Insbesondere erfolgt eine Subtraktion durch diesen Vergleich, so dass von der gemessenen Helligkeit die Helligkeit gemäß der Helligkeitskurve der Hauptlichtgruppe ohne Fremdlicht abgezogen wird. Mit anderen Worten wird davon ausgegangen, dass sich die gemessene Helligkeit aus zumindest zwei Komponenten zusammensetzt. Die erste Komponente ist das Fremdlicht, also der Haupt-Fremdlichtanteil, und die zweite Komponente ist das von der Hauptlichtgruppe erzeugte Licht. Da das von der Hauptlichtgruppe erzeugte Licht durch die entsprechende Helligkeitsgruppe der Hauptlichtgruppe ohne Fremdlicht bekannt ist, kann dieser bekannte Wert von dem gemessenen Wert abgezogen werden, um durch einfache Subtraktion den gewünschten Haupt-Fremdlichtanteil zu erhalten. Vorzugsweise erfolgt hier die Regelung, also die Rückkopplung zwischen der Messung und der Ansteuerung der Hauptlichtgruppe, derart, dass in Summe ein Sollwert für die Helligkeit von zum Beispiel, in normierter Version, 100%, erzielt wird. Die Werte können dabei neben einer normierten Variante in Prozent selbstverständlich auch als Absolutwerte, zum Beispiel in der Einheit [lux], angegeben sein.

Weiter kann es vorteilhaft sein, wenn bei einem erfindungsgemäßen Verfahren der Neben-Fremdlichtanteil zumindest einer Nebenlichtgruppe durch Multiplikation des Haupt-Fremdlichtanteils mit einem für diese Nebenlichtgruppe spezifischen Faktor ermittelt wird. Hier sei als Beispiel genannt, wie ohne zusätzliche Messung für jede Nebenlichtgruppe ein Neben-Fremdlichtanteil ermittelt, insbesondere berechnet, werden kann. Der spezifische Faktor ist dabei insbesondere ortsspezifisch. So ist für jede Nebenlichtgruppe ein solcher Faktor vorgesehen. Dementsprechend wird auch für jede Nebenlichtgruppe ein für diese Nebenlichtgruppe spezifischer Faktor verwendet, so dass pro Nebenlichtgruppe ein eigener Neben-Fremdlichtanteil erzielt wird. Die Anzahl der Nebenlichtgruppen ist dabei nicht begrenzt. Der Faktor ist ein spezifischer Faktor, der insbesondere die Relation der entsprechenden Nebenlichtgruppe zu der Einfallsposition von Fremdlicht, also zum Beispiel einem Fenster, beinhaltet. Insbesondere ist für jede Nebenlichtgruppe dieser spezifische Faktor fest voreingestellt. Dieser spezifische Faktor ist spezifisch für die Nebenlichtgruppe, aber auch für das gesamte Lichtsystem sowie den entsprechenden Innenraum. Wird das Lichtsystem anders aufgeteilt, die Nebenlichtgruppen anders gruppiert oder ändert sich am Innenraum die Lichtsituation durch eine Veränderung der Einfallsposition von Fremdlicht, so müssen auch die spezifischen Faktoren für die Nebenlichtgruppen angepasst werden.

Es ist vorteilhaft, wenn bei einem erfindungsgemäßen Verfahren der spezifische Faktor durch ein Kalibrierungsverfahren ermittelt ist, welches das Fremdlichtgefälle von einer Einfallposition des Fremdlichts in den Innenraum zu der zumindest eine Nebenlichtgruppe berücksichtigt. Auf diese Weise erfolgt eine Kalibrierung des gesamten Lichtsystems, insbesondere in Form einer Kalibrierungskurve. Das Fremdlichtgefälle kann zum Beispiel durch ein Luxmeter aufgenommen werden. Dabei kann das Fremdlichtgefälle zweidimensional, aber auch dreidimensional aufgenommen werden. Insbesondere ist der direkte oder indirekte Abstand zu einer Einfallsposition, zum Beispiel einem Fenster, für Fremdlicht zu berücksichtigen.

Es kann vorteilhaft sein, wenn bei einem erfindungsgemäßen Verfahren das Kalibrierungsverfahren zumindest die folgenden Schritte aufweist:
- Bestimmen der aktuellen Fremdlichtwerte ohne Kunstlicht für die Hauptlichtgruppe und für zumindest eine Nebenlichtgruppe,
- Ermitteln des spezifischen Faktors für zumindest eine Nebenlichtgruppe durch die Division des Fremdlichtwertes für die zumindest eine Nebenlichtgruppe durch die Fremdlichthelligkeit für die Hauptlichtgruppe.

Voranstehende Ausführungsform ist eine Möglichkeit für ein Kalibrierungsverfahren bei einem erfindungsgemäßen Verfahren. Hier wird spezifisch ausgeführt, dass die Tageswerte für die Hauptlichtgruppe und die Nebenlichtgruppe miteinander verglichen werden. Dieser Vergleich führt zu einem Prozentwert, welcher den Verlauf der Fremdlichtwerte über die einzelnen Lichtgruppen darstellt. Damit kann eine solche Kalibrierungskurve auch als Referenzkurve verstanden werden, welche den Verlauf des Fremdlichts im Innenraum nachbildet.

Selbstverständlich kann bei einem erfindungsgemäßen Verfahren das Kalibrierungsverfahren zu einem, aber auch zu verschiedenen mehreren Zeitpunkten durchgeführt werden. Vorteilhaft ist es, wenn das Kalibrierungsverfahren bei einem erfindungsgemäßen Verfahren zu verschiedenen Zeitpunkten mehrfach durchgeführt wird. Die Zeitpunkte unterscheiden sich dabei vorzugsweise hinsichtlich der Fremdlichtsituation. So unterscheiden sie sich zum Beispiel in Bezug auf die Tageszeit, so dass Kalibrierungskurven für die Morgen-, die Mittag- und die Abendsituation erstellt werden können. Auch Zeitpunkte mit Bezug auf die Jahreszeit, also Sommer, Winter, Herbst und Frühling sind hinsichtlich unterschiedlicher Kalibrierungskurven bei einem erfindungsgemäßen Verfahren durch das Kalibrierungsverfahren denkbar. Dabei kann anschließend nach der mehrfachen Ausführung des Kalibrierungsverfahrens ein Mitteln über verschiedene Kalibrierungskurven erfolgen, um eine einzige Kalibrierungskurve für die Durchführung eines erfindungsgemäßen Verfahrens zu erhalten. Auch ist es möglich, dass eine Vielzahl zeitabhängiger Kalibrierungskurven erzeugt wird, die alle für ein erfindungsgemäßes Verfahren eingesetzt werden.

Es kann daher vorteilhaft sein, wenn bei einem erfindungsgemäßen Verfahren bei der Ermittlung des Neben-Fremdlichtanteils ein spezifischer Faktor verwendet wird, der zeitabhängig ist. Die Zeitabhängigkeit des spezifischen Faktors entspricht sozusagen einer zeitabhängigen Kalibrierungskurve. Das bedeutet, dass auch das Steuer- und Regelungsverfahren gemäß der vorliegenden Erfindung zeitabhängig, insbesondere in Abhängigkeit der Tageszeit und/oder der Jahreszeit erfolgt. Mit anderen Worten wird zu einem Zeitpunkt am Vormittag ein anderer spezifischer Faktor für die Ermittlung des Neben-Fremdlichtanteils verwendet, als dies beispielsweise am Nachmittag der Fall ist.

Es kann auch vorteilhaft sein, wenn bei einem erfindungsgemäßen Verfahren der spezifische Faktor für zumindest eine Nebenlichtgruppe sich auf einen Haupt-Fremdlichtanteil bezieht, der auf die Hauptlichtgruppe normiert ist. Eine solche Normierung bedeutet, dass der Haupt-Fremdlichtanteil zum Beispiel bei der Hauptlichtgruppe auf 1 gesetzt wird. Dementsprechend werden die Faktoren für Nebenlichtgruppen, die näher am Fenster sind, größer 1 und Nebenlichtgruppen, die weiter vom Fenster entfernt sind als die Hauptlichtgruppe, kleiner 1. Diese Normierung erleichtert die nachfolgenden Ermittlungs- beziehungsweise Berechnungsschritte, so dass eine weitere Kostenreduktion hinsichtlich der Durchführung eines erfindungsgemäßen Verfahrens in einer Regel- und Steuervorrichtung erzielbar wird.

Auch vorteilhaft ist es, wenn bei einem erfindungsgemäßen Verfahren bei der Ermittlung des Neben-Stellwertes für zumindest eine Nebenlichtgruppe ein Vergleich zwischen einem Sollwert für die Helligkeit am Ort der Nebenlichtgruppe und dem Neben-Fremdlichtanteil durchgeführt wird. Insbesondere handelt es sich bei diesem Vergleich um die Subtraktion des Sollwerts minus dem Neben-Fremdlichtanteil. Wie bereits ausgeführt, ist der Sollwert dabei vorzugsweise identisch mit den Sollwerten für alle Nebenlichtgruppen beziehungsweise identisch mit dem Sollwert für die Hauptlichtgruppe. Damit wird zum Beispiel ein Sollwert von 100% angepeilt, so dass bei einem Neben-Fremdlichtanteil von beispielsweise 60% der Neben-Stellwert auf 40% gesetzt werden muss, um diesen Sollwert zu erreichen.

Ebenfalls von Vorteil kann es sein, wenn bei einem erfindungsgemäßen Verfahren ein Haupt-Stellwert für die Hauptlichtgruppe basierend auf dem Haupt-Fremdlichtanteil ermittelt wird. Damit wird ein erfindungsgemäßes Verfahren sowohl für die Regelung der Hauptlichtgruppe, als auch für die Steuerung der Nebenlichtgruppen verwendet. Auf diese Weise werden alle Lichtgruppen gemeinsam durch ein erfindungsgemäßes Verfahren gesteuert beziehungsweise geregelt.

Erfindungsgemäß kann es vorteilhaft sein, wenn der Haupt-Stellwert in einem Regelkreis und der Neben-Stellwert in einer Steuerung angewendet werden. Die Reduktion des Aufwandes für den Neben-Stellwert auf eine Steuerung im Vergleich zur aufwändigeren Regelung bringt Kostenvorteile und Geschwindigkeitsvorteile bei der Durchführung eines erfindungsgemäßen Verfahrens mit sich. Insbesondere kann die entsprechende Ausführvorrichtung für das Verfahren einfacher ausgebildet sein und die Leitungen können hinsichtlich der Verbindung zwischen dieser Ausführvorrichtung und den Nebenlichtgruppen für die Steuerung entsprechend kostengünstiger ausgebildet sein.

Dadurch, dass eine Vielzahl von Steuerungen für die Nebenlichtgruppen anstelle von Regelungen notwendig sind, kann auf eine Vielzahl von Sensoren verzichtet werden, so dass durch ein erfindungsgemäßes Verfahren auch die Komplexität eines Lichtsystems reduziert wird.

Ebenfalls vorteilhaft ist es, wenn sich der Sollwert zumindest einer Nebenlichtgruppe von einem Sollwert von zumindest einer anderen Nebenlichtgruppe und/oder von der Hauptlichtgruppe unterscheidet. Damit kann die Flexibilität eines erfindungsgemäßen Verfahrens noch weiter erhöht werden. Insbesondere kann auf diese Weise auch eine Variation der Ausleuchtung des Innenraums erfolgen, die unabhängig von Fremdlichtanteil immer beibehalten wird. So ist es zum Beispiel möglich, einzelne Nebenlichtgruppen, die zum Beispiel direkt einem Arbeitsplatz zugeordnet sind, mit einem höheren Sollwert für die gewünschte Helligkeit zu versehen als andere Nebenlichtgruppen. Do können bewusste und erwünschte Ungleichheiten bei der Ausleuchtung des Innenraums erzielt werden, ohne die gewünschte Abhängigkeit vom Fremdlichtanteil zu beeinträchtigen.

Ein weiterer Gegenstand der vorliegenden Erfindung ist ein Lichtsystem mit einer Hauptlichtgruppe und zumindest einer Nebenlichtgruppe für die Beleuchtung eines Innenraums. Ein erfindungsgemäßes Lichtsystem zeichnet sich dadurch aus, dass eine Helligkeitsregelvorrichtung vorgesehen ist, die für die Ausführung eines erfindungsgemäßen Verfahrens ausgebildet ist. Dementsprechend bringt ein erfindungsgemäßes Lichtsystem die gleichen Vorteile mit sich, wie sie ausführlich mit Bezug auf ein erfindungsgemäßes Verfahren erläutert worden sind. Die Helligkeitsvorrichtung weist dabei insbesondere einen Sensor auf, um die Bestimmung der Helligkeit für die Hauptlichtgruppe zu erzielen. Dimmer können für jede Lichtgruppe zum Beispiel in der Helligkeitsregelvorrichtung oder auch für jede Nebenlichtgruppe separat vorgesehen sein, die mit einem entsprechenden Stellwert von der Helligkeitsregelvorrichtung angesteuert werden können.

Es kann vorteilhaft sein, wenn bei einem erfindungsgemäßen Lichtsystem die Helligkeitsregelvorrichtung in oder an der Hauptlichtgruppe angeordnet ist. Die Hauptlichtgruppe kann sozusagen als Master bezeichnet werden, während die Nebenlichtgruppen als sogenannte Slaves bezeichnet sind. Die Hauptlichtgruppe dient dabei als komplexeste Einheit, die gleichzeitig den höchsten Preis aufweist. Nebenlichtgruppen können in beliebiger Anzahl dieser Hauptlichtgruppe zugeordnet werden, ohne die Komplexität des gesamten Lichtsystems im Großen und Ganzen zu erhöhen.

Bei einer Helligkeitsvorrichtung sind für die einzelnen Ausführungsschritte des Verfahrens vorzugsweise einzelne Einheiten vorgesehen. Insbesondere sind eine Vergleichseinheit, eine Recheneinheit, eine Ermittlungseinheit, eine Multiplikationseinheit und/oder eine Divisionseinheit in der Helligkeitsregelvorrichtung ausgebildet.

Die vorliegende Erfindung wird näher erläutert anhand der beigefügten Zeichnungsfiguren. Die dabei verwendeten Begrifflichkeiten "links", "rechts", "oben" und "unten" beziehen sich auf eine Ausrichtung der Zeichnungsfiguren mit normal lesbaren Bezugszeichen. Es zeigen schematisch:
- Figur 1: eine Darstellung von Graphen der Helligkeit über den Stellwert der Hauptlichtgruppe,
- Figur 2: eine Ausführungsform eines erfindungsgemäßen Lichtsystems,
- Figur 3: eine Ausführungsform eines erfindungsgemäßen Verfahrens,
- Figur 4: eine Ausführungsform eines Kalibrierungsverfahrens,
- Figur 5a: eine Ausführungsform der Ermittlungsmethode bei einem erfindungsgemäßen Verfahren und
- Figur 5b: eine Ausführungsform der Berechnungsmethode für ein Kalibrierungsverfahren.

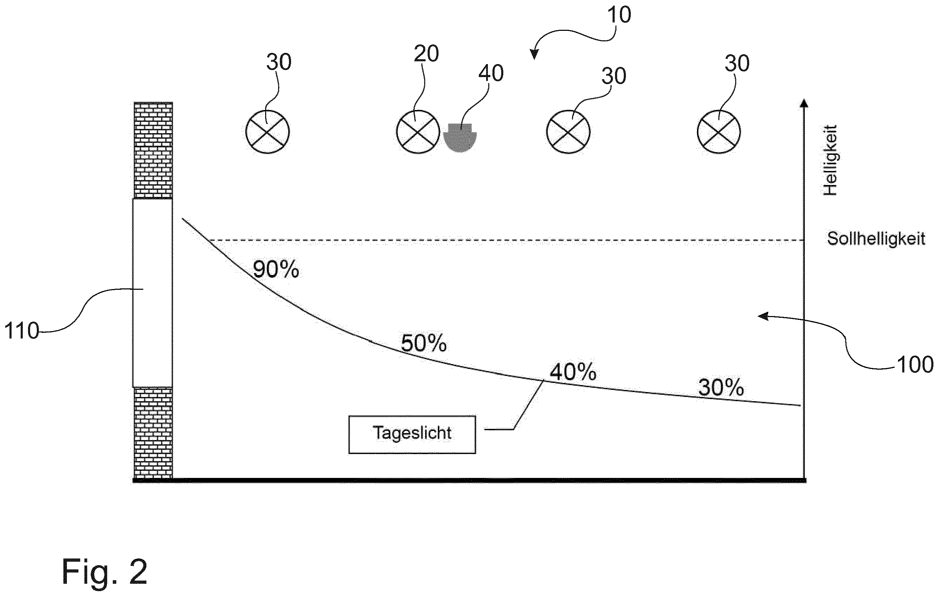

In der Figur 2 ist eine Ausführungsform eines erfindungsgemäßen Lichtsystems 10 schematisch dargestellt. Bei dieser Ausführungsform weist das Lichtsystem 10 eine Hauptlichtgruppe 20 und drei Nebenlichtgruppen 30 auf. Die schematische Darstellung der Figur 2 zeigt im Wesentlichen einen Schnitt durch einen Innenraum 100, so dass jede Lichtgruppe 20, 30 eine Vielzahl von Leuchtmitteln aufweist, die als Reihe entlang einer Achse angeordnet sind, die senkrecht zur Zeichnungsebene der Figur 2 steht. Es ist zu erkennen, dass der Innenraum 100 ein Fenster aufweist, welches als Einfallposition 110 für Fremdlicht dient. Über den Innenraum 100 ist eine Kurve für Fremdlicht aufgetragen, welche der Fremdlichtkurve entspricht. Diese Fremdlichtkurve für Fremdlicht kann zum Beispiel ermittelt werden, indem für eine Vielzahl von Positionen ein Luxmeter bei ausgeschaltetem Lichtsystem 10 die einfallende Menge an Fremdlicht misst. Diese Fremdlichtkurve ist insbesondere zeitabhängig und kann für unterschiedliche Tageszeiten und unterschiedliche Jahreszeiten ermittelt werden.

In Figur 2 ist auch zu erkennen, dass für jede Nebenlichtgruppe 30 ein explizierter Wert für das Fremdlicht, nämlich 90%, 40% und 30% vorgegeben ist. Damit ist das Fremdlichtgefälle bestimmt, basierend auf welchem als Referenzkurve ein spezifischer Faktor vorgegeben sein kann, um aus einem Haupt-Fremdlichtanteil den jeweiligen Neben-Fremdlichtanteil zu ermitteln.

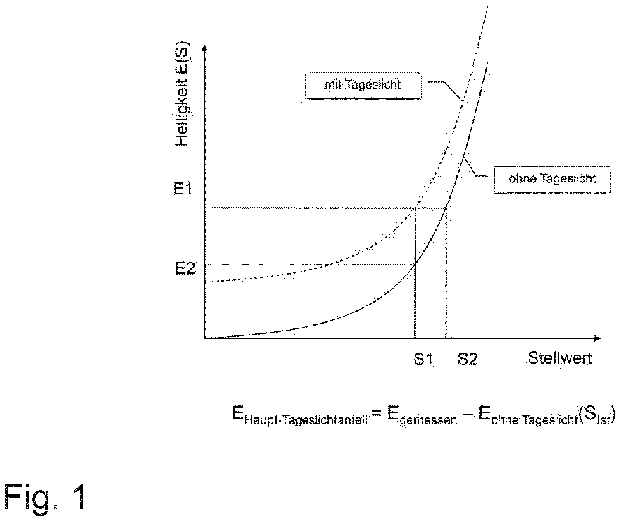

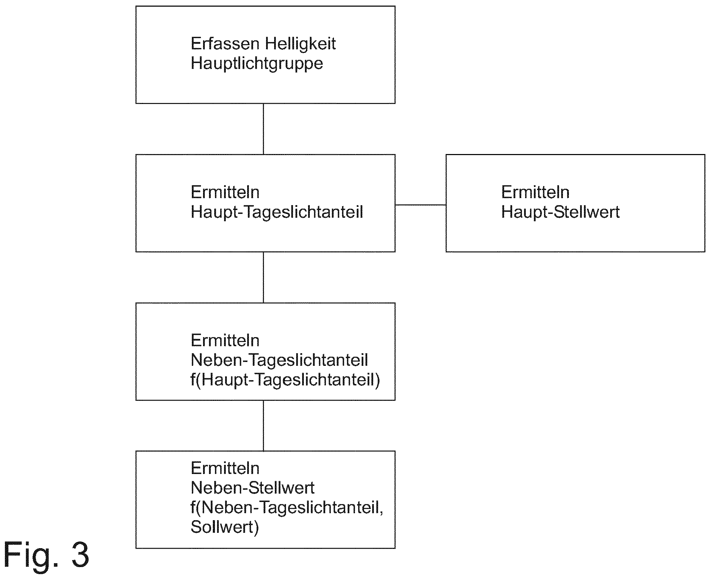

In Figur 3 ist schematisch eine Ausführungsform eines erfindungsgemäßen Verfahrens dargestellt. In einem ersten Schritt wird die Helligkeit der Hauptlichtgruppe 20 ermittelt. Hierzu wird auf Figur 2 Bezug genommen. Dort ist ein Sensor vorgesehen, der beim Beispiel der Figur 2 einen Wert von 100% für die Helligkeit bei der Hauptlichtgruppe ermittelt. Anschließend wir der Haupt-Fremdlichtanteil ermittelt. Hierzu wird vorgegangen wie es beispielsweise in Figur 1 dargestellt ist. Für die Hauptlichtgruppe 20 ist eine Helligkeitskurve bekannt, wie sie ohne Fremdlicht verläuft. In Figur 1 ist diese Kurve mit durchgezogener Linie dargestellt. Wird nun ein Wert für die Helligkeit gemessen und ist der entsprechende Stellwert für die Hauptlichtgruppe bekannt, so ist die Differenz zwischen der durchgezogenen Linie ohne Fremdlicht und dem Wert mit Fremdlicht, also dem gemessenen Wert, bezüglich der jeweiligen Stellposition der Hauptlichtgruppe 20 als Rest der Haupt-Fremdlichtanteil. In Figur 2 handelt es sich um eine Situation bei der der Haupt-Fremdlichtanteil 50% beträgt. Ausgehend von diesem Haupt-Fremdlichtanteil kann ein Haupt-Stellwert erzeugt werden, der die Hauptlichtgruppe dahingehend regelt, dass eine Sollhelligkeit von 100% erreicht wird.

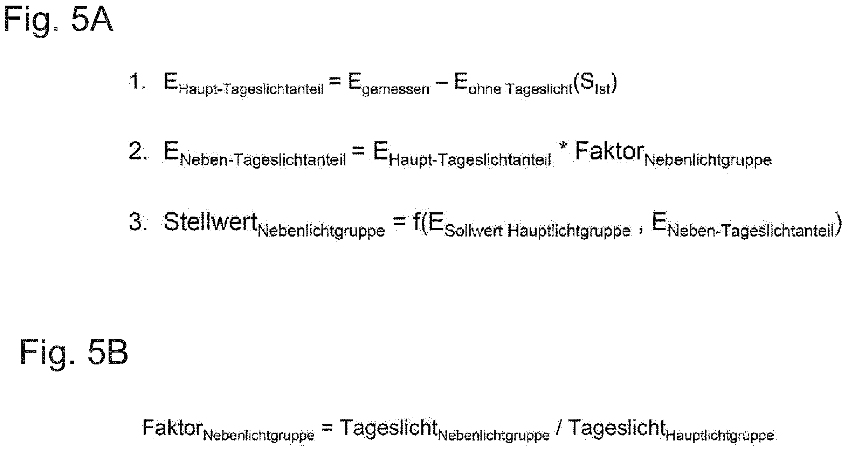

Anschließend wird, wie der Figur 3 zu entnehmen ist, der Neben-Fremdlichtanteil ermittelt. Dies erfolgt auf Basis des Haupt-Fremdlichtanteils. Eine Möglichkeit zur derartigen Ermittlung ist beispielsweise in Figur 5a dargestellt. Dort findet sich nach der Ermittlung des Haupt-Fremdlichtanteils, wie er zu Figur 1 bereits erläutert worden ist, unter Punkt 2 die Ermittlung des Neben-Fremdlichtanteils. Hier wird der Neben-Fremdlichtanteil als Funktion des Haupt-Fremdlichtanteils berechnet, indem er mit einem spezifischen Faktor für die Nebenlichtgruppe multipliziert wird. Beispielsweise ist für die zweite Nebenlichtgruppe 30 von rechts in Figur 2 dieser spezifische Faktor 0,8. Um also von dem gemessenen Haupt-Fremdlichtanteil von 50% auf den im Neben-Fremdlichtanteil für diese Nebenlichtgruppe 30 zu kommen, müssen die 50% mit 0,8 multipliziert werden, so dass die 40% anhand der Restlichtkurve gemäß Figur 2 erzielt werden. Dabei ist darauf hinzuweisen, dass es sich hier um eine Ermittlung und nicht um eine Messung handelt, so dass kein Sensor für die jeweilige Nebenlichtgruppe 30 erforderlich ist.

Wie in Figur 3 und auch in Figur 5a zu erkennen ist, dient als letzter Schritt eines erfindungsgemäßen Verfahrens die Ermittlung des Neben-Stellwertes. Dieser ist eine Funktion in Abhängigkeit eines Sollwertes sowie des Neben-Fremdlichtanteils. Beispielsweise kann dies durch einen Vergleich stattfinden. Als Sollwert ist in Figur 2 beispielsweise 100% für alle Nebenlichtgruppen 30 gemeinsam als Helligkeit vorgegeben. Wird beispielsweise für die ganz linke Nebenlichtgruppe 30 ein Neben-Fremdlichtanteil von 90% ermittelt, so wird über diese Funktion und die entsprechenden Vergleichsoperatoren beziehungsweise die Differenz ein Stellwert für die Nebenlichtgruppe zur Verfügung gestellt, der 10% für die Nebenlichtgruppe 30 notwendig macht, um den Rest auf den Sollwert aufzufüllen. Damit wird eine flexible Verteilung erzielt, so dass eine Sollhelligkeit über den gesamten Innenraum 100 in Abhängigkeit des Haupt-Fremdlichtanteils erfolgt. Es erfolgt also eine dynamische beziehungsweise flexible Steuerung sämtlicher Nebenlichtgruppen 30 in Abhängigkeit von einem einzigen gemessenen Wert, nämlich der gemessenen Helligkeit und der daraus ermittelten Werte für den Haupt-Fremdlichtanteil.

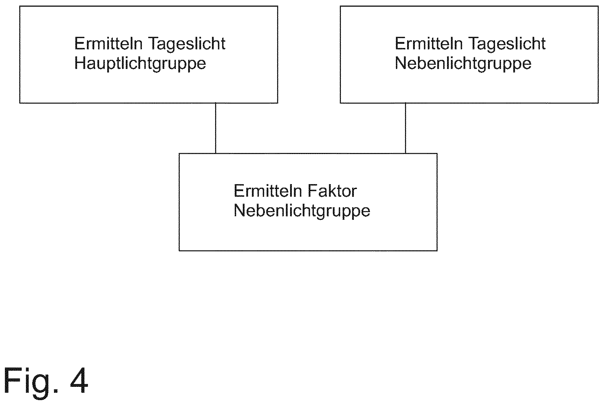

In Figur 4 und 5b wird eine Variante eines Kalibrierungsverfahrens dargestellt. Nach dieser Ausführungsform wird sowohl für die Hauptlichtgruppe, als auch für die Nebenlichtgruppe bei Fremdlicht und ausgeschaltetem Lichtsystem 10 der entsprechende Fremdlichtwert ermittelt. Daraus ergibt sich zum Beispiel mit der Formel gemäß Figur 5b als Division, der Faktor für die entsprechende Nebenlichtgruppe 30. Dies wird vorzugsweise für jede Nebenlichtgruppe 30 und insbesondere auch zu verschiedenen Zeitpunkten durchgeführt. Die Zeitpunkte unterscheiden sich dabei zum Beispiel hinsichtlich der Tageszeit und/oder hinsichtlich der Jahreszeit. Bei der Durchführung eines erfindungsgemäßen Verfahrens gemäß 5a kann dabei vorzugsweise ein Faktor spezifisch für die jeweilige Nebenlichtgruppe 30 verwendet werden, der darüber hinaus auch zeitabhängig sein kann. Diese Zeitabhängigkeit ermöglicht es, auch unterschiedliche Einstrahlsituationen für die Einfallposition 110 in den Innenraum 100 zu berücksichtigen.

### Bezugszeichenliste

- 10: Lichtsystem
- 20: Hauptlichtgruppe
- 30: Nebenlichtgruppe
- 40: Helligkeitsregelvorrichtung
- 100: Innenraum
- 110: Einfallposition

## Patentansprüche

1. Verfahren zur Steuerung und Regelung eines Lichtsystems (10) mit einer Hauptlichtgruppe (20) und zumindest einer Nebenlichtgruppe (30) für einen Innenraum (100), aufweisend die folgenden Schritte:
- Erfassen einer Helligkeit am Ort der Hauptlichtgruppe (20),
- Ermitteln eines Haupt-Fremdlichtanteils für die Hauptlichtgruppe (20), und **gekennzeichnet durch** die folgenden Schritte:
- Ermitteln eines Neben-Fremdlichtanteils für zumindest eine Nebenlichtgruppe (30) basierend auf dem Haupt-Fremdlichtanteil,
- wobei der Haupt- und der Neben-Fremdlichtanteil nicht selbst vom Lichtsystem (10) erzeugt worden sind,
- Ermitteln eines Neben-Stellwertes für zumindest eine Nebenlichtgruppe (30) basierend auf dem Neben-Fremdlichtanteil und einem Sollwert für diese Nebenlichtgruppe (30).

2. Verfahren nach Anspruch 1, **dadurch gekennzeichnet, dass** der Haupt-Fremdlichtanteil durch einen Vergleich zwischen einer Helligkeitskurve der Hauptlichtgruppe (20) ohne Fremdlicht und der gemessenen Helligkeit, jeweils mit Bezug auf eine Haupt-Stellgröße der Hauptlichtgruppe (20), durchgeführt wird.

3. Verfahren nach mindestens einem der vorhergehenden Ansprüche 1 oder 2, **dadurch gekennzeichnet, dass** der Neben-Fremdlichtanteil zumindest einer Nebenlichtgruppe (30) durch Multiplikation des Haupt-Fremdlichtanteils mit einem für diese Nebenlichtgruppe (30) spezifischen Faktor ermittelt wird.

4. Verfahren nach Anspruch 3, **dadurch gekennzeichnet, dass** der spezifische Faktor durch ein Kalibrierungsverfahren ermittelt ist, welches das Fremdlichtgefälle von einer Einfallposition (110) des Fremdlichts in den Innenraum (100) zu der zumindest einen Nebenlichtgruppe (30) berücksichtigt.

5. Verfahren nach Anspruch 4, **dadurch gekennzeichnet, dass** das Kalibrierungsverfahren zumindest die folgenden Schritte aufweist:
- Bestimmen der aktuellen Fremdlichtwerte ohne Kunstlicht für die Hauptlichtgruppe (20) und für zumindest eine Nebenlichtgruppe (30),
- Ermitteln des spezifischen Faktors für zumindest eine Nebenlichtgruppe (30) durch die Division des Fremdlichtwertes für die zumindest eine Nebenlichtgruppe (30) durch die Fremdlichthelligkeit für die Hauptlichtgruppe (20).

6. Verfahren nach einem der Ansprüche 4 oder 5, **dadurch gekennzeichnet, dass** das Kalibrierungsverfahren zu verschiedenen Zeitpunkten mehrfach durchgeführt wird.

7. Verfahren nach Anspruch 6, **dadurch gekennzeichnet, dass** bei der Ermittlung des Neben-Fremdlichtanteils ein spezifischer Faktor verwendet wird, der zeitabhängig ist.

8. Verfahren nach mindestens einem der vorhergehenden Ansprüche 3 bis 7, **dadurch gekennzeichnet, dass** der spezifische Faktor für zumindest eine Nebenlichtgruppe (30) sich auf einen Haupt-Fremdlichtanteil bezieht, der auf die Hauptlichtgruppe (30) normiert ist.

9. Verfahren nach mindestens einem der vorhergehenden Ansprüche, **dadurch gekennzeichnet, dass** bei der Ermittlung des Neben-Stellwertes für zumindest eine Nebenlichtgruppe (30) ein Vergleich zwischen einem Sollwert für die Helligkeit am Ort der Nebenlichtgruppe (30) und dem Neben-Fremdlichtanteil durchgeführt wird.

10. Verfahren nach mindestens einem der vorhergehenden Ansprüche, **dadurch gekennzeichnet, dass** ein Haupt-Stellwert für die Hauptlichtgruppe (20) basierend auf dem Haupt-Fremdlichtanteil ermittelt wird.

11. Verfahren nach Anspruch 10, **dadurch gekennzeichnet, dass** der Haupt-Stellwert in einem Regelkreis und der Neben-Stellwert in einer Steuerung angewendet werden.

12. Verfahren nach mindestens einem der vorhergehenden Ansprüche, **dadurch gekennzeichnet, dass** sich der Sollwert zumindest einer Nebenlichtgruppe (30) von einem Sollwert von zumindest einer anderen Nebenlichtgruppe (30) und/oder von der Hauptlichtgruppe (20) unterscheidet.

13. Lichtsystem (10) mit einer Hauptlichtgruppe (20) und zumindest einer Nebenlichtgruppe (30) für die Beleuchtung eines Innenraums (100), **dadurch gekennzeichnet, dass** eine Helligkeitsregelvorrichtung (40) mit entsprechenden Mitteln vorgesehen ist, für die Ausführung eines Verfahrens mit den Merkmalen nach mindestens einem der vorhergehenden Ansprüchen.

14. Lichtsystem (10) nach Anspruch 13, **dadurch gekennzeichnet, dass** die Helligkeitsregelvorrichtung (40) in oder an der Hauptlichtgruppe (20) angeordnet ist.

15. Lichtsystem (10) nach Anspruch 13 oder 14, **dadurch gekennzeichnet, dass** die Helligkeitsregelvorrichtung (40) einen Sensor aufweist, um die Bestimmung der Helligkeit für die Hauptlichtgruppe (20) zu erzielen.

## Claims

1. Method for open-loop and closed-loop control of a illumination system (10) with a primary luminaire (20) and at least one secondary luminaire (30) for an interior space (100), having the following steps:
- measuring a brightness at the location of the primary luminaire (20),
- determining a primary day light percentage for the primary luminaire (20),
and **characterised by** the following steps:
- determining a secondary day light percentage for at least one secondary luminaire (30) based on the primary day light percentage,
- wherein the primary day light percentage and the secondary day light percentage are not themselves generated by the illumination system (10),
- determining a secondary manipulated variable for at least one secondary luminaire (30) based on the secondary day light percentage and a setpoint value for this secondary luminaire (30).

2. Method according to claim 1, **characterised in that** the primary day light percentage is obtained from a comparison between a brightness curve of the primary luminaire (20) without ambient light and the measured brightness, in each case in respect of a primary manipulated variable of the primary luminaire (20).

3. Method according to at least one of the preceding claims 1 or 2, **characterised in that** the secondary day light percentage of at least one secondary luminaire (30) is determined by multiplying the primary day light percentage by a factor specific to this secondary luminaire (30).

4. Method according to claim 3, **characterised in that** the specific factor is determined using a calibration method which takes into account the ambient light gradient of an incidence position (110) of the ambient light into the interior space (100) for the at least one secondary luminaire (30).

5. Method according to claim 4, **characterised in that** the calibration method has at least the following steps:
- determining the current ambient light values in the absence of artificial light for the primary luminaire (20) and for at least one secondary luminaire (30),
- determining the specific factor for at least one secondary luminaire (30) by dividing the ambient light value for the at least one secondary luminaire (30) by the ambient light brightness for the primary luminaire (20).

6. Method according to one of claims 4 or 5, **characterised in that** the calibration method is performed several times at different points in time.

7. Method according to claim 6, **characterised in that** when determining the secondary day light percentage a specific factor is used which is time-dependent.

8. Method according to at least one of the preceding claims 3 to 7, **characterised in that** the specific factor for at least one secondary luminaire (30) relates to a primary day light percentage which is standardised to the primary luminaire (30).

9. Method according to at least one of the preceding claims, **characterised in that** when determining the secondary manipulated variable for at least one secondary luminaire (30) a comparison is performed between a setpoint value for the brightness at the location of the secondary luminaire (30) and the secondary day light percentage.

10. Method according to at least one of the preceding claims, **characterised in that** a primary manipulated variable is determined for the primary luminaire (20) based on the primary day light percentage.

11. Method according to claim 10, **characterised in that** the primary manipulated variable is applied in a closed-loop control circuit and the secondary manipulated variable in an open-loop control system.

12. Method according to at least one of the preceding claims, **characterised in that** the setpoint value of at least one secondary luminaire (30) differs from a setpoint value of at least one other secondary luminaire (30) and/or of the primary luminaire (20).

13. Illumination system (10) with a primary luminaire (20) and at least one secondary luminaire (30) for lighting an interior space (100), **characterised in that** a brightness regulation device (40) is provided with corresponding means for the execution of a method with the features according to at least one of the preceding claims.

14. Illumination system (10) according to claim 13, **characterised in that** the brightness regulation device (40) is arranged in or on the primary luminaire (20).

15. Illumination system (10) according to claim 13 or 14, **characterised in that** the brightness regulation device (40) has a sensor in order to determine the brightness for the primary luminaire (20).

## Revendications

1. Procédé de commande et de régulation d'un système de luminaires (10) comprenant un groupe de luminaires principal (20) et au moins un groupe de luminaires secondaire (30) pour une pièce intérieure (100), comportant les étapes suivantes :
- détection d'une luminosité sur le site du groupe de luminaires principal (20),
- détermination d'une fraction principale de lumière extérieure pour le groupe de luminaires principal (20),
et **caractérisé par** les étapes suivantes :
- détermination d'une fraction secondaire de lumière extérieure pour au moins un groupe de luminaires secondaire (30) sur la base de la fraction principale de lumière extérieure,
- les fractions principale et secondaire de lumière extérieure n'étant pas elles-mêmes générées par le système de luminaires (10),
- détermination d'une valeur de réglage secondaire pour au moins un groupe de luminaires secondaire (30) sur la base de la fraction secondaire de lumière extérieure et d'une valeur de consigne pour ce groupe de luminaires secondaire (30).

2. Procédé selon la revendication 1, **caractérisé en ce que** la fraction principale de lumière extérieure est réalisée par une comparaison entre une courbe de luminosité du groupe de luminaires principal (20) sans lumière extérieure et la luminosité mesurée, respectivement en référence à une grandeur de réglage principale du groupe de luminaires principal (20).

3. Procédé selon au moins l'une des revendications précédentes 1 ou 2, **caractérisé en ce que** la fraction secondaire de lumière extérieure d'au moins un groupe de luminaires secondaire (30) est déterminée par multiplication de la fraction principale de lumière extérieure par un facteur spécifique pour ce groupe de luminaires secondaire (30).

4. Procédé selon la revendication 3, **caractérisé en ce que** le facteur spécifique est déterminé par un procédé de calibration qui tient compte de l'écart de lumière extérieure entre une position d'incidence (110) de la lumière extérieure dans la pièce intérieure (100) et l'au moins un groupe de luminaires secondaire (30).

5. Procédé selon la revendication 4, **caractérisé en ce que** le procédé de calibration comporte au moins les étapes suivantes :
- détermination des valeurs de lumière extérieure actuelles sans lumière artificielle pour le groupe de luminaires principal (20) et pour au moins un groupe de luminaires secondaire (30),
- détermination du facteur spécifique pour au moins un groupe de luminaires secondaire (30) par la division de la valeur de lumière extérieure pour l'au moins un groupe de luminaires secondaire (30) par la luminosité de la lumière extérieure pour le groupe de luminaires principal (20).

6. Procédé selon l'une des revendications 4 ou 5, **caractérisé en ce que** le procédé de calibration est exécuté à plusieurs reprises à des instants différents.

7. Procédé selon la revendication 6, **caractérisé en ce que**, lors de la détermination de la fraction secondaire de lumière extérieure, un facteur spécifique fonction du temps est utilisé.

8. Procédé selon au moins l'une des revendications précédentes 3 à 7, **caractérisé en ce que** le facteur spécifique pour au moins un groupe de luminaires secondaire (30) se réfère à une fraction principale de lumière extérieure qui est normée sur le groupe de luminaires principal (30).

9. Procédé selon au moins l'une des revendications précédentes, **caractérisé en ce que**, lors de la détermination de la valeur de réglage secondaire pour au moins un groupe de luminaires secondaire (30), une comparaison entre une valeur de consigne de la luminosité sur le site du groupe de luminaires secondaire (30) et la fraction secondaire de lumière extérieure est effectuée.

10. Procédé selon au moins l'une des revendications précédentes, **caractérisé en ce qu'**une valeur de réglage principale est déterminée pour le groupe de luminaires principal (20) sur la base de la fraction principale de lumière extérieure.

11. Procédé selon la revendication 10, **caractérisé en ce que** la valeur de réglage principale est utilisée dans un circuit de régulation et la valeur de réglage secondaire, dans une commande.

12. Procédé selon au moins l'une des revendications précédentes, **caractérisé en ce que** la valeur de consigne au moins d'un groupe de luminaires secondaire (30) est différente d'une valeur de consigne d'au moins un autre groupe de luminaires secondaire (30) et/ou du groupe de luminaires principal (20).

13. Système de luminaires (10) comportant un groupe de luminaires principal (20) et au moins un groupe de luminaires secondaire (30) pour éclairer une pièce intérieure (100), **caractérisé en ce qu'**est prévu un dispositif de réglage de la luminosité (40) avec des moyens appropriés pour exécuter un procédé présentant les caractéristiques selon au moins l'une des revendications précédentes.

14. Système de luminaires (10) selon la revendication 13, **caractérisé en ce que** le dispositif de réglage de la luminosité (40) est agencé dans ou sur le groupe de luminaires principal (20).

15. Système de luminaires (10) selon la revendication 13 ou 14, **caractérisé en ce que** le dispositif de réglage de la luminosité (40) présente un capteur pour obtenir la détermination de la luminosité pour le groupe de luminaires principal (20).
